# EUROPÄISCHE PATENTSCHRIFT

(11) **EP 1 151 323 B1**
(45) Veröffentlichungstag und Bekanntmachung des Hinweises auf die Patenterteilung: **07.04.2004**
(21) Anmeldenummer: 00908929.3
(22) Anmeldetag: 12.01.2000
(51) Int. Cl.: G01V 1/32

(54) **VERFAHREN ZUR SEISMISCHEN DATENVERARBEITUNG**
METHOD FOR PROCESSING SEISMIC DATA
PROCEDE DE TRAITEMENT DE DONNEES SISMIQUES

(30) Priorität: 03.02.1999 DE 19904347
(43) Veröffentlichungstag der Anmeldung: 07.11.2001
(73) Patentinhaber: Trappe, Henning, 30916 Isernhagen (DE)
(72) Erfinder: TRAPPE, Henning, D-30916 Isernhagen (DE); HELLMICH, Carsten, D-30163 Hannover (DE); FÖLL, Marc, D-30163 Hannover (DE)
(74) Vertreter: Hansen, Jochen
(86) Internationale Anmeldenummer: PCT/DE2000/000139
(87) Internationale Veröffentlichungsnummer: WO 2000/046615

(56) Entgegenhaltungen:
- WO-A-96/18915
- GB-A- 1 531 548
- US-A- 5 157 638
- US-A- 5 586 082

## Beschreibung

Die Erfindung betrifft ein Verfahren zur Bearbeitung eines seismischen 2-D oder 3-D Meßdatensatzes bestehend aus einer Vielzahl von seismischen Spuren, die jeweils eine Reihe von mit Amplitudenwerten belegten Datenpunkten aufweisen.

Seismische Erkundungsverfahren werden weltweit genutzt, um neben Informationen aus abgeteuften Bohrungen zusätzliche Erkenntnisse über Verbreitung von geologischen Strukturen im Untergrund zu erhalten. Oftmals kann aufgrund von Informationen aus seismischen Daten auf weitere kostenintensive Erkundungsbohrungen verzichtet oder ihre Zahl auf ein Minimum eingeschränkt werden.

Bei der seismischen Erkundung des Untergrundes werden Sensoren (Geophone/Hydrophone) benutzt, die hintereinander aufgereiht (2D-Seismik) Schallwellen empfangen. Diese Wellen werden von einer seismischen Quelle, beispielsweise Sprengladung, Vibrationsanregung oder Luftpulsern (airguns), angeregt und von den Erdschichten z. T. an die Oberfläche zurückreflektiert. Dort werden sie von den Sensoren registriert und in Form einer Zeitreihe aufgezeichnet. Diese Zeitreihe stellt die ankommende seismische Energie in Form von Amplitudenschwankungen dar. Sie wird digital gespeichert und besteht aus gleichmäßig angeordneten Datenpunkten (Samples), die durch die Zeit und den zugehörigen Amplitudenwert gekennzeichnet sind. Eine solche Zeitreihe wird auch als seismische Spur bezeichnet. Die Meßreihe wandert über das zu untersuchende Gebiet, so daß mit dieser Anordnung ein 2D seismisches Profil aufgenommen wird.

Die nachfolgende Weiterverarbeitung (Processing) hat eine Rauschunterdrückung z. B. durch Stapelung oder gezielt angewendete Filter zum Ziel. Resultierende Ergebnisse sind Vertikalprofile, in denen Amplituden und Laufzeiten sowie aus Amplituden abgeleitete Attribute dargestellt sind, die als Grundlage für die weitere geologische Auswertung dienen. Die geologischen Schichten lassen sich auf einem Profil durch die laterale Amplitudenaneinanderreihung verfolgen.

Werden die Daten nicht nur entlang einer Linie sondern in einem flächenmäßigen Raster aufgenommen, ergibt sich ein dreidimensionales Datenvolumen. Im Fall des 3D-Volumens wird einem beliebigen Punkt im Untergrund, beschrieben z. B. durch kartesische Koordinaten, ein Amplitudenwert zugeordnet. Die vertikale Richtung wird in Zeit (Schallaufzeit) gemessen.

Dabei fallen große Datenmengen an (mehrere Gigabyte), die gespeichert und dem Processing unterzogen werden, bevor die eigentliche Interpretation in Bezug z. B. auf die weitere Erkundung des Untergrundes möglich ist. Diese Prozesse verlangen umfangreiche Computerresourcen und Software, um das empfangene Signal zu verarbeiten und zu korrigieren. Das Ergebnis ist ein seismisches Volumen in Form eines 3D-Datensatzes, der in einem seismischen Abbild physikalische Eigenschaften des untersuchten Untergrundes darstellt.

Aus diesem Datensatz können beliebige Schnitte, wie z. B. vertikale Profile und horizontale Karten aus verschiedenen Teufen extrahiert werden, die im weiteren Verlauf von Geophysikern und Geologen interpretiert werden. Da diese Interpretation der gewonnenen seismischen Abbilder im wesentlichen eine optische Korrelation umfaßt, sind Versuche unternommen worden, diese von einem oder mehreren Interpreten abhängige, subjektive Auswertung zu automatisieren.

Aus der WO 96/18915 ist ein Verfahren zur seismischen Datenverarbeitung bekannt, bei dem ein seismisches 3D-Volumen in eine Vielzahl von vertikal übereinanderstehenden und beabstandeten horizontalen Scheiben aufgeteilt wird, wobei wenigstens eine Scheibe in eine Vielzahl von Zellen geteilt wird. Dabei weist jede Zelle wenigstens 3 Spurabschnitte auf, wobei der erste und zweite Spurabschnitt in eine Vertikalebene in Profilrichtung (inline) und der dritte Spurabschnitt mit dem ersten Spurabschnitt in einer Vertikalebene im wesentlichen senkrecht zur Profilrichtung (crossline) angeordnet sind. Dann wird eine Kreuzkorrelation zwischen jeweils zwei Spurabschnitten in den beiden Vertikalebenen durchgeführt, die von der Schichtneigung abhängige inline- und crossline-Werte ergeben. Die Kombination dieser Werte in einer Zelle ergibt einen Kohärenzwert für die Zelle, der einem Datenpunkt der Zelle zugeordnet wird. Das Endergebnis ist wiederum ein 3D-Datenvolumen, aus dem beliebige Schnitte extrahiert und dargestellt werden können.

Aus der EP 0 832 442 A1 ist ein Verfahren und eine Vorrichtung zur seismischen Datenverarbeitung mittels Kohärenzcharakteristik bekannt, bei dem in zur o.g.

Druckschrift ähnlichen Weise ein seismisches Volumen in horizontale Scheiben und diese wiederum in Zellen unterteilt werden. Diese Zellen sind im einfachsten Fall würfelförmig. Aus dem in einer Zelle befindlichen wenigstens zwei Spurabschnitten wird eine Korrelationsmatrix als Summe der Differenzen jeweils des inneren und des äußeren Produkts der Wertetupel aus den Spurabschnitten gebildet. Als Maß für die Kohärenz wird dann der Quotient aus dem größten Eigenwert der Matrix und der Summe aller Eigenwerte berechnet. Als Ergebnis entsteht wiederum ein 3D-Volumen bestehend aus Kohärenzwerten.

Desweiteren betrifft die EP 0 796 442 A1 ein Verfahren und eine Anlage zur seismischen Datenverarbeitung, bei dem ein Kohärenzverfahren, basierend auf einer Semblanceanalyse, durchgeführt wird. Ähnlich zu den beiden vorgenannten Verfahren wird ein seismisches Datenvolumen in wenigstens eine horizontale Zeitscheibe und diese in eine Vielzahl von dreidimensionalen Analysezellen eingeteilt, wobei jede Zelle zwei vorbestimmte, zueinander senkrechte Lateralrichtungen und wenigstens fünf nebeneinander angeordnete seismische Spurabschnitte darin aufweist. In der jeweiligen Zelle wird dem entsprechenden Datenpunkt ein Semblancewert der in der Zelle befindlichen Spurabschnitte zugeordnet. Die Semblance ist hierbei ein bekanntes Maß für die Übereinstimmung seismischer Spurabschnitte. Dabei wird durch ein Absuchen verschiedener Schichtneigungen und Richtungen das Einfallen und die Einfallsrichtung des analysierten Reflektors durch die beste Kohärenz ermittelt. Neben dem Semblancewert werden dann für jede Zelle auch die berechneten Neigungsdaten angezeigt.

Die drei vorgenannten Auswerteverfahren ermöglichen zwar eine automatisierte Unterstützung der Dateninterpretation, jedoch wird die damit erreichbare höhere Objektivität in der Interpretation mit einem erheblichen Rechenaufwand an den seismischen Daten erkauft.

Aus der Präsentation auf der DGMK Deutsche Wissenschaftliche Gesellschaft für Erdöl, Erdgas und Kohle e. V., Tagungsbericht 9601 (1996) ist von C. Hellmich, H. Trappe und J. Fertig mit dem Titel "Bildverarbeitung seismischer Attribute und Geostatistik im Oberkarbon" eine Bildbearbeitungsmethode bekannt, die eine quantitative Charakterisierung seismischer Darstellungen ermöglicht und somit weitere Interpretationen der Lithologie zuläßt. Dabei werden unterschiedliche Bildverarbeitungsfilter auf Amplitudenkarten angewandt und die Schwankungen bzw. die Kontinuität der Amplitudenwerte der näheren Umgebung quantifiziert. Diese Filter stellen 2D-Mehrspurfilter dar, mit denen die lokale Umgebung um einen Datenpunkt herum ausgewertet wird. Verwendete Operatoren hierfür sind u.a. Entropie und Dispersion. Mit allen Attributen können Karten zur Interpretation erzeugt werden. Dabei sind die Größen "Entropie" oder "Dispersion" Maßzahlen, die Schwankungen bzw. Kontinuitäten der Amplitude in der lokalen Umgebung quantifizieren.

Eine großflächige Bearbeitung der o.g. Methoden scheidet häufig aus Kostengründen aus.

Die US 5 432 751 und US 5 153 858 beschreiben eine Zuordnung von dem Wert "0" oder "1" zu einem Sample, wobei diese Zuordnung lediglich dem Markieren und schnellen Wiederauffinden von Stellen im seismischen Signal mit einer bestimmten Charakteristik dient. Dabei sollen diese Markierungen dazu dienen, zu einem späteren Zeitpunkt diese Stellen in einem halbautomatischen Verfahren zu einem geologischen Horizont zusammenzufassen (Automatik-Picking), wobei die durch die Zuordnung erzielte Speicherplatzreduzierung die interaktive Bearbeitung der Gesamtheit der charakteristischen Stellen ermöglicht. Es wird also zunächst der seismische Meßdatensatz nach einer bestimmten Charakteristik verglichen und nach dem Ergebnis der entsprechende Horizont mit "1" markiert. Dann dient dieser Datensatz ausschließlich dem schnellen Wiederauffinden entsprechender Datenpositionen der originalen, erheblich umfangreicheren seismischen Daten.

Aufgabe der Erfindung ist es, ein Bearbeitungsverfahren für seismische Meßdatensätze anzugeben, mit dem die Identifizierung geologischer Strukturen, wie z. B. Störungen oder Schichtversätze, wie auch der stratigraphischen, lithologischen und petrologischen Verhältnisse bei möglichst geringem Rechenaufwand und gleichzeitiger hoher Objektivität der Ergebnisse ermöglicht wird.

Gelöst wird diese Aufgabe mit einem Verfahren gemäß Patentanspruch 1, 2 oder 3.

Erfindungswesentlich ist dabei, daß der zu untersuchende Meßdatensatz, bestehend aus einer Vielzahl von Reihen von mit Amplitudenwerten belegten Datenpunkten, die in der Regel Zeitreihen sind, in einen Binärdatensatz umgewandelt wird, wobei jedem Datenpunkt statt des mehrere Byte umfassenden diskreten Amplitudenwertes ein Binärwert "0" oder "1" zugewiesen wird. Dabei wird der diskrete Amplitudenwert mit einem vorbestimmten Schwellenwert verglichen und bei einem gegenüber dem Schwellenwert kleineren Amplitudenwert die Zahl "0" und anderenfalls die Zahl "1" zugewiesen. Die Amplitudeninformation wird somit binarisiert. Die Datenmenge reduziert sich beispielsweise bei einer üblichen Amplitudenauflösung von 4 Byte um den Faktor 32.

Der so erzeugte Binärdatensatz wird nachfolgend einer Ähnlichkeitsanalyse in einer mit vorbestimmter Zellengröße definierten Umgebung unterzogen, wo zu jedem Datenpunkt die Ähnlichkeit der in der Zelle befindlichen Binärdaten analysiert wird und dem zugeordneten zentralen Datenpunkt eine die Ähnlichkeit widerspiegelnde Größe zugewiesen wird.

Da nur mit Binärgrößen gerechnet werden muß, verkürzt sich die Rechenzeit gegenüber vergleichbaren Interpretationsmethoden um ca. 97 %. Darüberhinaus verlangen die Ergebnisdaten gegenüber vergleichbaren Methoden einen verringerten Speicherplatz, da in der Regel 1 Byte zur Darstellung des Attributes "Ähnlichkeit" ausreicht. Ferner ist das Verfahren aufgrund der Normierung durch die Binarisierung niveauunabhängig, so daß keine Skalierungsprobleme bei der Ergebnisdarstellung auftreten. Zudem ist das Ergebnis unabhängiger in Bezug auf mögliche Verarbeitungs(Processing)-fehler.

Der erfindungsgemäß erzeugte Datensatz kann in üblichen Horizontal- oder Vertikalschnitten (Karten und Profilen), beispielsweise in Graustufen oder in Farbcodierung dargestellt werden. Diese Karten und Profile zeigen ein klares Abbild der geologischen Strukturen, wie beispielsweise die Lokalisierung von Salzüberhängen, Lage und Orientierung von Störungen, Schicht- und Blockversätzen, Horst- und Grabenstrukturen etc., und geben somit ein Instrument zur Beurteilung des Untergrundes an. Insbesondere können Kohlenwasserstofflagerstätten, beispielsweise Erdöl- und Erdgasfallen und allgemein die laterale, wie auch vertikale Verteilung von Erdöl- und Erdgasvorkommen aus den erfindungsgemäß verarbeitenden Datensätzen bestimmt werden.

Dabei wird der Wert, der die Ähnlichkeit widerspiegelt, durch Zählung der Datenpunkte mit gleichem Binärwert (jeweils "0" und "1") in der gesamten Umgebungszelle errechnet, wobei die größere Zahl (Anzahl) dem zentralen Datenpunkt im neu entstehenden Datensatz zugeordnet wird. Dabei spiegeln große Werte eine große Übereinstimmung der Datenwerte in der betrachteten Zelle wider.

Alternativ wird die Ermittlung des Ähnlichkeitswertes durch Zählung der Datenpunkte mit gleichem Binärwert, jeweils "0" und "1", jedoch für jede horizontale, einen Datenpunkt mächtige Scheibe der Zelle getrennt durchgeführt. Die größere Zahl (Anzahl) wird als Ähnlichkeitswert der Scheibe in einem Zwischenschritt zugewiesen, wonach die Summe der einzelnen Werte dem zentralen Datenpunkt im neu entstehenden Datensatz zugeordnet wird. Mit dieser Ähnlichkeitsanalyse wird eine horizontale Gewichtung berücksichtigt.

Weiter alternativ kann eine Gewichtung in linearer, vertikaler Richtung entlang der jeweiligen seismischen Spur dadurch erreicht werden, daß eine Zählung der Datenpunkte mit gleichem Binärwert, jeweils "0" und "1", erfolgt, jedoch für jede Spur, d. h. binäre Zeitreihe, der Zelle getrennt. Die größere Zahl (Anzahl) wird als Ähnlichkeitswert in einem Zwischenschritt der Spur zugewiesen. Die Summe der einzelnen spurbezogenen Werte einer Zelle werden dann dem zentralen Datenpunkt im neu entstehenden Datensatz zugeordnet.

Da die üblichen Amplitudenwerte seismischer Spuren zwischen +X und -X variieren, wobei X eine maximal darstellbare Amplitudengröße ist, würde ein Schwellenwert um 0 statistisch eine etwa gleichgewichtige Aufteilung von "0" und "1" im bei der Binarisierung erzeugten Binärdatensatz liefern. Bevorzugt wird jedoch nicht 0, sondern ein um wenige Bit (LSB) größerer oder kleinerer Wert als Schwellenwert voreingestellt.

Alternativ kann als Schwellenwert der aus einer Histogrammanalyse des Meßdatensatzes oder eines Ausschnittes davon vor der Binarisierung als häufigster Wert hervorgegangener Amplitudenwert bestimmt werden.

Wenn die Zelle zum bearbeiteten Datenpunkt angenähert eine rechteckige/quaderförmige oder elliptische/ellipsoidförmige Umgebung umfaßt, wird ein möglichst ausgewogenes Analyseergebnis erreicht. Bevorzugt sind dabei würfelförmige oder kugelförmige Zellen.

Eine für viele Anwendungen geeignete Zellengröße besteht aus 5 x 5 Datenpunkten bei einem 2D-Datensatz bzw. 5 x 5 x 5 Datenpunkten bei einem 3D-Datensatz.

Als Ausgangspunkt wird bevorzugt ein statisch und dynamisch korrigierter, gestapelter und migrierter seismischer Meßdatensatz verwendet. Es können auch weiterverarbeitete Meßdatensätze, beispielsweise zusätzlich gefilterte und teufenkonvertierte Datensätze verwendet werden. Ebenso ist die Anwendung auf ungestapelte Daten, beispielsweise Einzelschußzusammenstellungen (shotgather) und CMP-gather möglich. Dazu zählen auch abgeleitete seismische Attribute, wie akkustische Impedanz (aus der seismischen Inversion) und AVO-Attribute (z.B. AVO-Gradient, AVO-Intercept).

Nachfolgend wird die Erfindung in einem Ausführungsbeispiel unter Bezugnahme auf die beiliegenden Figuren detailliert beschrieben.

Darin zeigt:
- Fig. 1: ein schematisch dargestelltes 3D-Datenvolumen mit einer exemplarisch markierten Zelle,
- Fig. 2: die Oberkante einer Schicht aus einem erfindungsgemäß bearbeiteten Datensatz in einer Kartendarstellung und
- Fig. 3: die Oberkante einer weiteren Schicht des gleichen Meßgebietes in einer Darstellung wie Fig. 2.

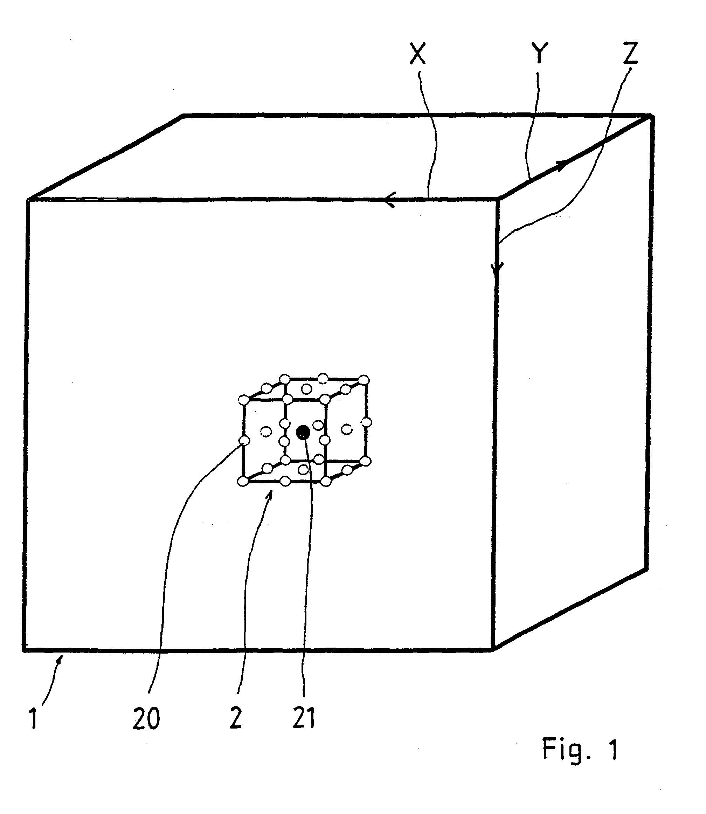

In Fig. 1 ist schematisch ein 3D-Datensatz als quaderförmiges Volumen 1 dargestellt. In dem 3D-Datenvolumen sind eine Vielzahl nicht einzelnd dargestellter seismischer Spuren zusammengestellt. Die seismischen Spuren sind dabei bevorzugt aus mehrfach überdeckten seismischen Meßprofilen durch statische und dynamische Korrekturen mit anschließender Stapelung und Migration gewonnen. Jede seismische Spur entspricht damit einer in Richtung der Z-Achse (Tiefe) verlaufenden Zeitreihe, wobei jedem Datenpunkt (Sample) ein digitaler Amplitudenwert zugeordnet ist. Der Abstand der Datenpunkte ist abhängig von der Abtastrate, die üblicherweise in der Seismik 1, 2 oder 4 Millisekunden beträgt. Der Spurabstand in lateraler Richtung (X- und Y-Richtung) ist abhängig von der Auslagengeometrie und der Schußfolge und beträgt üblicherweise 12,5 m, 25 m oder 50 m.

Zunächst wird nun jeder Amplitudenwert eines Datenpunktes in dem Datenvolumen mit einem Schwellenwert verglichen und bei Unterschreiten des Schwellenwertes mit "0" bzw. bei Überschreiten des Schwellenwertes mit "1" belegt. Somit wird ein binärer Datensatz mit der gleichen Anzahl und Anordnung von Datenpunkten erzeugt, bei der jedem Datenpunkt nur ein binärer Wert ("0" oder "1") zugeordnet wird.

Nun wird eine Umgebungszelle für die weitere Verarbeitung vorgewählt, die zu jedem betrachteten zentralen Datenpunkt eine bestimmte Anzahl und geometrische Anordnung angrenzender Datenpunkte umfaßt.

Die Zelle kann dabei sowohl in lateraler Richtung (X-und Y-Richtung), wie auch in vertikaler Richtung beliebig groß gewählt werden. Auch die Zellenform ist nicht festgelegt. Aufgrund des räumlichen Rasters der Datenpunkte erscheint eine quaderförmige oder würfelförmige Zellenform bevorzugt. Ebenso können jedoch auch angenähert zylinderförmige, ellipsoidförmige oder parallelepipedförmige Zellen vorgewählt werden. Die Wahl der Zellengröße hängt einerseits von den sich im Datensatz widerspiegelnden geologischen Gegebenheiten und andererseits von den geometrisch-/zeitlichen Rasterabständen der Datenpunkte im Datensatz ab.

Zur Veranschaulichung ist in Fig. 1 eine 3 x 3 x 3 Datenpunkte umfassende Zelle 2 in Würfelform wiedergegeben. Eine derartige Zelle 2 umfaßt 27 binäre Datenpunkte 20 in der Zelle 2. Es werden somit die um einen zentralen Datenpunkt 21 sich direkt anschließenden Datenpunkte bei der Auswertung für diesen zentralen Datenpunkte 21 berücksichtigt.

Es wird hier darauf hingewiesen, daß sich in der Praxis eine Zellengröße von 5 x 5 x 5 Datenpunkten als besonders vorteilhaft herausgestellt hat. Die in Fig. 1 dargestellte Zellengröße dient insbesondere der Veranschaulichung.

Für die nachfolgende Ähnlichkeitsanalyse wird nun diese voreingestellte Umgebungszelle zu jedem im zu betrachtenden Datenvolumen enthaltenen Datenpunkt gebildet. An den Rändern des Datensatzes wird eine Auswertung nur für Datenpunkte vorgenommen, für die die Umgebungszelle vollständig im Datenvolumen enthalten ist. Alternativ können auch Nullspuren an den Rändern hinzugefügt werden, um auch zu Datenpunkten, die auf dem Rand des Originaldatensatzes liegen, Ähnlichkeitswerte berechnet zu können, wobei der Ähnlichkeitswert von den angefügten Nullspuren beeinflußt wird.

Bei der Ähnlichkeitsanalyse wird dann jedem Zentraloder Mittelpunktsdatenpunkt ein die Ähnlichkeit in der jeweiligen Umgebungszelle widerspiegelnder Wert zugeordnet. Somit wird aus dem binären Datensatz ein Datensatz mit gleichem Datenpunktraster erzeugt, wobei jedem Datenpunkt ein Ähnlichkeitswert als Attribut zugewiesen wird.

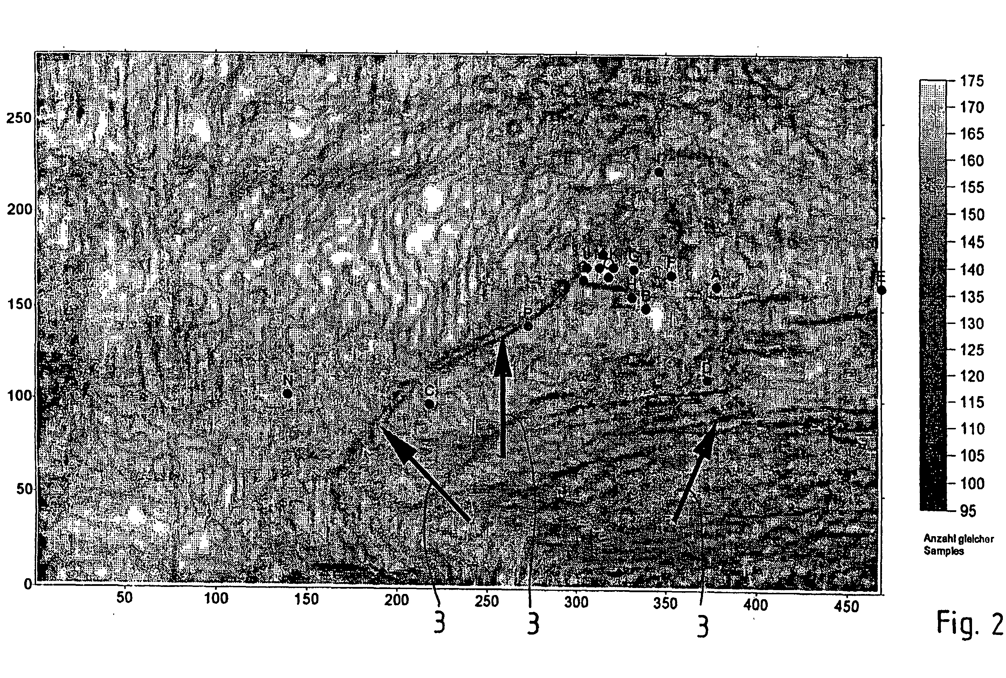

In Fig. 2 ist eine Kartendarstellung der Oberkante einer Schicht nach Bearbeitung mit dem erfindungsgemäßen Verfahren widergegeben.

Dabei ist in dem 3D-Datensatzvolumen die Oberkante dieser Schicht vorher bei der üblichen seismischen Datenauswertung markiert (gepickt) worden.

Zur erfindungsgemäßen seismischen Datenbearbeitung wurde das 3D-Datenvolumen, wie oben beschrieben, in einen Binärdatensatz umgewandelt. Nun wurde entlang der markierten, einen Datenpunkt mächtigen Schichtoberkante, die erfindungsgemäße Ähnlichkeitsanalyse zu den die Schichtoberkante repräsentierenden Datenpunkten durchgeführt. Dabei wurde in dem Ausführungsbeispiel eine Zellengröße von 5 x 5 x 7 Datenpunkten in X-, Y- und Z-Richtung verwendet. Diese Umgebung wurde für jeden Datenpunkt entlang der Schichtoberkante betrachtet. Dabei wurde als Ähnlichkeitswert dem betrachteten zentralen Datenpunkt die größere Anzahl gleicher Binärwerte in der betrachteten Zelle zugewiesen. Der Wertebereich umfaßt somit natürliche Zahlen von 88 bis 175, die entsprechend in Fig. 2 rechts dargestellter Grauabstufung in der Kartendarstellung widergegeben sind.

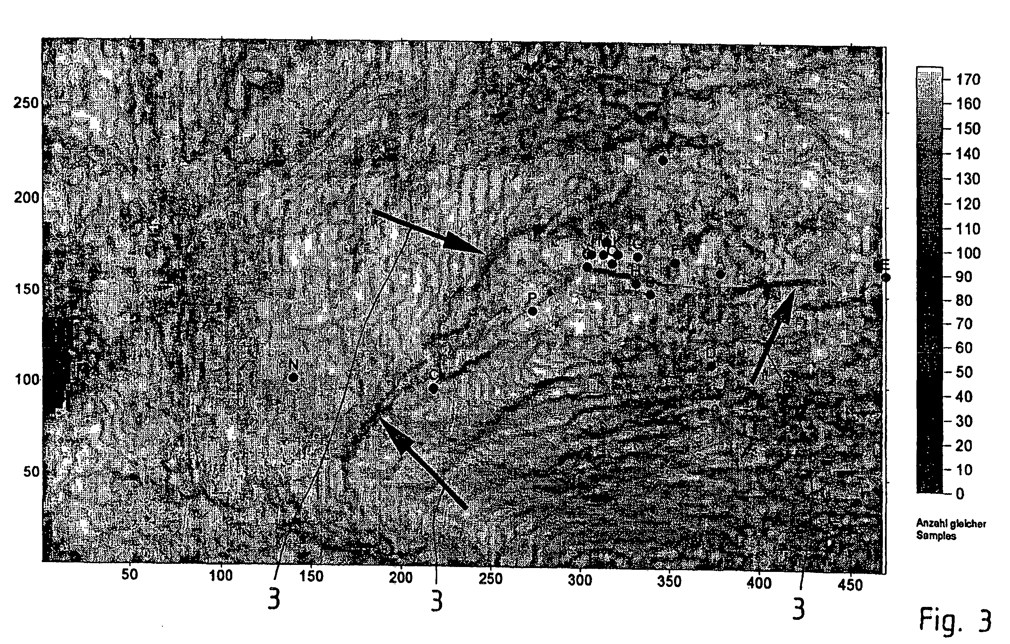

In Fig. 3 ist eine entsprechende Kartendarstellung einer weiteren Schichtoberkante wiedergegeben, die in zu Fig. 2 entsprechender Verarbeitung erstellt ist.

In beiden Figuren sind in dem Meßgebiet vorhandene Bohrlokationen mit großen Buchstaben gekennzeichnet.

Die als Karten wiedergegebenen, erfindungsgemäß verarbeiteten Datensätze erleichtern die Interpretation der Untergrunddaten. Beispielsweise sind in den Fig. 2 und 3 Störungszonen deutlich an den mit Pfeilen 3 gekennzeichneten Stellen erkennbar. Diese Störungszonen sind in herkömmlich verarbeiteten 3D-Datensätzen nur schwer lokalisierbar.

Mit der Anwendung des erfindungsgemäßen Verfahrens ist es möglich, eine verbesserte Identifizierung geologischer Strukturen sowie der stratigraphischen, lithologischen und petrologischen Verhältnisse zu erreichen. Dabei ist der Rechenaufwand durch die Binarisierung der Amplitudenwerte und der mit einfachen Rechenregeln realisierten Ähnlichkeitsanalyse minimiert.

## Patentansprüche

1. Verfahren zur Bearbeitung eines seismischen 2-D oder 3-D Meßdatensatzes bestehend aus einer Vielzahl von seismischen Spuren, die jeweils eine Reihe von mit Amplitudenwerten belegten Datenpunkten aufweisen, mit den Schritten:
- Umwandeln des Meßdatensatzes in einen Binärdatensatz, in dem jedem Datenpunkt entweder die Zahl "0" bei gegenüber einem vorbestimmten Schwellenwert kleinerem Amplitudenwert oder anderenfalls die Zahl "1" zugewiesen wird und
- Einbeziehen einer mit einer vorbestimmten Zellengröße definierten Umgebung zu jedem binarisierten Datenpunkt in eine Ähnlichkeitsanalyse, wobei jedem Datenpunkt ein Wert zugewiesen wird, der den Grad der Ähnlichkeit der binären Datenwerte in der jeweiligen zugeordneten Zelle widerspiegelt und der größeren Anzahl der Datenpunkte mit gleichem Binärwert der Zelle entspricht.

2. Verfahren zur Bearbeitung eines seismischen 2-D oder 3-D Meßdatensatzes bestehend aus einer Vielzahl von seismischen Spuren, die jeweils eine Reihe von mit Amplitudenwerten belegten Datenpunkten aufweisen, mit den Schritten:
- Umwandeln des Meßdatensatzes in einen Binärdatensatz, in dem jedem Datenpunkt entweder die Zahl "0" bei gegenüber einem vorbestimmten Schwellenwert kleinerem Amplitudenwert oder anderenfalls die Zahl "1" zugewiesen wird und
- Einbeziehen einer mit einer vorbestimmten Zellengröße definierten Umgebung zu jedem binarisierten Datenpunkt in eine Ähnlichkeitsanalyse, wobei jedem Datenpunkt ein Wert zugewiesen wird, der den Grad der Ähnlichkeit der binären Datenwerte in der jeweiligen zugeordneten Zelle widerspiegelt und der Summe der jeweils größeren Anzahl der Datenpunkte mit gleichem Binärwert in den einen Datenpunkt mächtigen horizontalen Ebenen der Zelle entspricht.

3. Verfahren zur Bearbeitung eines seismischen 2-D oder 3-D Meßdatensatzes bestehend aus einer Vielzahl von seismischen Spuren, die jeweils eine Reihe von mit Amplitudenwerten belegten Datenpunkten aufweisen, mit den Schritten:
- Umwandeln des Meßdatensatzes in einen Binärdatensatz, in dem jedem Datenpunkt entweder die Zahl "0" bei gegenüber einem vorbestimmten Schwellenwert kleinerem Amplitudenwert oder anderenfalls die Zahl "1" zugewiesen wird und
- Einbeziehen einer mit einer vorbestimmten Zellengröße definierten Umgebung zu jedem binarisierten Datenpunkt in eine Ähnlichkeitsanalyse, wobei jedem Datenpunkt ein Wert zugewiesen wird, der den Grad der Ähnlichkeit der binären Datenwerte in der jeweiligen zugeordneten Zelle widerspiegelt und der Summe der jeweils größeren Anzahl der Datenpunkte mit gleichem Binärwert in jeder Spur der Zelle entspricht.

4. Verfahren nach Anspruch 1, 2 oder 3, **gekennzeichnet durch** einen geringfügig größer oder kleiner als Null voreingestellten Schwellenwert.

5. Verfahren nach Anspruch 1, 2 oder 3, **dadurch gekennzeichnet, daß** der Meßdatensatz oder ein Ausschnitt davon vor der Binarisierung einer Histogrammanalyse unterzogen wird und der häufigste Amplitudenwert als Schwellenwert verwendet wird.

6. Verfahren nach einem der vorangehenden Ansprüche, **dadurch gekennzeichnet, daß** die Zelle zum bearbeiteten Datenpunkt angenähert eine rechteckige/quaderförmige oder elliptische/ellipsoidförmige Umgebung umfaßt.

7. Verfahren nach Anspruch 6, **dadurch gekennzeichnet, daß** die Zellengröße auf 5 x 5(x 5) Datenpunkte voreingestellt wird.

8. Verfahren nach einem der vorangehenden Ansprüche, **dadurch gekennzeichnet, daß** der seismische Meßdatensatz statisch und dynamisch korrigiert ist.

9. Verfahren nach einem der vorangehenden Ansprüche, **dadurch gekennzeichnet, daß** der seismische Meßdatensatz zeit- oder tiefenmigriert ist.

## Claims

1. A method for processing a seismic 2-D or 3-D measurement data set comprised of a great number of seismic traces each comprising a series of data points occupied by amplitude values, comprising the steps
- conversion of the set of measured data into a set of binary data in which each data point is assigned either the number "0" if the amplitude value is lower versus a predetermined threshold value or otherwise assigned the number "1"; and
- inclusion of an environment defined by a predetermined cell size for each binarized data point in a similarity analysis, whereby each data point is assigned a value reflecting the degree of the similarity of the binary data value in the respective associated cell, and the greater number of data points with the same binary value corresponds with the cell.

2. A method for processing a seismic 2-D or 3-D measurement data set comprised of a great number of seismic traces each comprising a series of data points occupied by amplitude values, comprising the steps
- conversion of the set of measured data into a set of binary data in which each data point is assigned either the number "0" if the amplitude value is lower versus a predetermined threshold value, or otherwise assigned the number "1"; and
- inclusion of an environment defined by a predetermined cell size for each binarized data point in a similarity analysis, whereby each data point is assigned a value reflecting the degree of similarity of the binary data values in the respective associated cell, and the sum of the greater numbers of data points with the same binary values in each horizontal plane with a thickness of one data point corresponds with the cell.

3. A method for processing a seismic 2-D or 3-D measurement data set comprised of a great number of seismic traces each comprising a series of data points occupied by amplitude values, comprising the steps
- conversion of the set of measured data into a set of binary data in which each data point is assigned either the number "0" if the amplitude value is lower versus a predetermined threshold value, or otherwise the number "1"; and
- inclusion of an environment defined by a predetermined cell size for each binarized data point in a similarity analysis, whereby each data point is assigned a value reflecting the degree of similarity of the binary data values in the respective associated cell, and the sum of the greater numbers of data points with the same binary value in each trace corresponds with the cell.

4. The method according to claim 1, 2 or 3, **characterized by** a preadjusted threshold value that is slightly greater or smaller than zero.

5. The method according to claim 1, 2 or 3, **characterized in that** the set of measured data or a cutout therefrom is subjected to a histogram analysis prior to the binarization, and the most frequently occurring amplitude value is used as the threshold value.

6. The method according to any one of the preceding claims, **characterized in that** the cell associated with the processed data point comprises an approximately rectangular/squared stone-shaped or an elliptic/ellipsoidal environment.

7. The method according to claim 6, **characterized in that** the cell size is preadjusted to 5 x 5 (x 5) data points.

8. The method according to any one of the preceding claims, **characterized in that** the seismic measurement data set is statically and dynamically corrected.

9. The method according to any one of the preceding claims, **characterized in that** the seismic measurement data set is time- or depth-migrated.

## Revendications

1. Procédé pour le traitement d'un ensemble de données de mesure sismiques en deux ou trois dimensions composé d'une pluralité de traces sismiques qui présentent chacune une suite de points de donnée pourvus d'une valeur d'amplitude, comprenant les étapes suivantes :
• conversion de l'ensemble de données de mesure en un ensemble de données binaires dans lequel on attribue à chaque point de donnée la valeur « 0 » lorsque la valeur d'amplitude est inférieure à une valeur seuil prédéterminée ou la valeur « 1 » dans le cas contraire et
• association d'un environnement défini par une taille de cellule prédéterminée à chaque point de donnée binaire lors d'une analyse de similitude, avec attribution à chaque point de donnée d'une valeur représentative du degré de similitude des valeurs de données binaires dans la cellule attribuée à ce point et qui correspond au plus grand nombre des points de données ayant la même valeur binaire dans la cellule.

2. Procédé pour le traitement d'un ensemble de données de mesure sismiques en deux ou trois dimensions composé d'une pluralité de traces sismiques qui présentent chacune une suite de points de donnée pourvus d'une valeur d'amplitude, comprenant les étapes suivantes :
• conversion de l'ensemble de données de mesure en un ensemble de données binaires dans lequel on attribue à chaque point de donnée la valeur « 0 » lorsque la valeur d'amplitude est inférieure à une valeur seuil prédéterminée ou la valeur « 1 » dans le cas contraire et
• association d'un environnement défini par une taille de cellule prédéterminée à chaque point de donnée binaire lors d'une analyse de similitude, avec attribution à chaque point de donnée d'une valeur représentative du degré de similitude des valeurs de données binaires dans la cellule attribuée à ce point et qui correspond à la somme du plus grand nombre des points de donnée ayant la même valeur binaire dans les plans horizontaux de la cellule comportant un point de donnée.

3. Procédé pour le traitement d'un ensemble de données de mesure sismiques en deux ou trois dimensions composé d'une pluralité de traces sismiques qui présentent chacune une suite de points de donnée pourvus d'une valeur d'amplitude, comprenant les étapes suivantes :
• conversion de l'ensemble de données de mesure en un ensemble de données binaires dans lequel on attribue à chaque point de donnée la valeur « 0 » lorsque la valeur d'amplitude est inférieure à une valeur seuil prédéterminée ou la valeur « 1 » dans le cas contraire et
• association d'un environnement défini par une taille de cellule prédéterminée à chaque point de donnée binaire lors d'une analyse de similitude, avec attribution à chaque point de donnée d'une valeur représentative du degré de similitude des valeurs de données binaires dans la cellule attribuée à ce point et qui correspond à la somme du plus grand nombre des points de donnée ayant la même valeur binaire dans chaque trace de la cellule.

4. Procédé selon la revendication 1, 2 ou 3, **caractérisé par une** valeur seuil très légèrement supérieure ou inférieure à zéro.

5. Procédé selon la revendication 1, 2 ou 3, **caractérisé en ce que** l'ensemble de données de mesure ou une partie de celui-ci est soumis(e) à une analyse de l'histogramme avant la binarisation et la valeur d'amplitude la plus fréquente est utilisée comme valeur seuil.

6. Procédé selon l'une des revendications précédentes, **caractérisé en ce que** la cellule pour le point de donnée à traiter comprend un environnement sensiblement rectangulaire / parallélépipédique ou elliptique / ellipsoïdal.

7. Procédé selon la revendication 6, **caractérisé en ce que** la taille de la cellule est préréglée à 5 x 5 (x 5) points de donnée.

8. Procédé selon l'une des revendications précédentes, **caractérisé en ce que** l'ensemble de données de mesure sismiques est corrigé statiquement et dynamiquement.

9. Procédé selon l'une des revendications précédentes, **caractérisé en ce que** l'ensemble de données de mesure sismiques est migré en temps ou en profondeur.
